Europäisches Patentamt

European Patent Office

Office européen des brevets

(19)

(11) Veröffentlichungsnummer : **0 195 178 B1**

(12) **EUROPÄISCHE PATENTSCHRIFT**

(45) Veröffentlichungstag der Patentschrift :
30.11.88

(21) Anmeldenummer : 86100221.0

(22) Anmeldetag : 09.01.86

(51) Int. Cl.⁴ : **F 16 K 3/08**

(54) **Durchgangs- und Absperrventil.**

(30) Priorität : **20.03.85 DE 3509973**

(43) Veröffentlichungstag der Anmeldung :
**24.09.86 Patentblatt 86/39**

(45) Bekanntmachung des Hinweises auf die Patenterteilung : **30.11.88 Patentblatt 88/48**

(84) Benannte Vertragsstaaten :
**AT BE DE FR GB IT NL SE**

(56) Entgegenhaltungen :
**FR-A- 2 161 194
GB-A- 2 127 940
GB-A- 2 136 545**

(73) Patentinhaber : **IDEAL-STANDARD GMBH
Euskirchener Strasse 80
D-5300 Bonn 1 (DE)**

(72) Erfinder : **Bergmann, Konrad, Dr.
zur Philippsburg 70
D-5560 Wittlich (DE)**

Jouve, 18, rue St-Denis, 75001 Paris, France

**Beschreibung**

Die Erfindung bezieht sich auf ein Durchgangs- und Absperrventil, wie zum Beispiel aus GB-A-2 136 545 bekannt, mit mindestens drei untereinander gleichgestalteten und Durchgänge aufweisenden Scheiben als Dicht- und Steuerelemente, von denen die beiden äußeren Scheiben feststehen, während die mittlere Scheibe beweglich ist, wobei die Scheiben Dichtflächen aufweisen.

Bei den bisher bekannten Ventilen dieser Art ist von Nachteil, daß das im abgesperrten Zustand in den Durchgängen der mittleren Scheibe eingeschlossene Medium bei Temperaturerhöhungen sich so stark ausdehnen kann, daß ein Abheben der Scheiben voneinander möglich ist. Diese Gefahr ist deshalb gegeben, weil identisch gestaltete Durchgänge und damit identisch gestaltete Dichtflächen Verwendung finden, wodurch die Durchgänge in der mittleren Scheibe im abgesperrten Zustand durch die stegförmigen Dichtflächen der äußeren Scheiben beidseitig geschlossen sind. Ein weiterer Nachteil bei Konstruktionen dieser Art ist darin zu sehen, daß die Durchgänge ein Ablösen der Strömung am Eintritt in das Scheibenpaket mit sich bringen und damit zu einem erhöhten Strömungswiderstand führen. Ferner weist diese Ausführung den Nachteil auf, daß in Drosselstellung austrittsseitig das Medium mit hoher Geschwindigkeit und hohem Drall in die Rohrleitung strömt.

Der Erfindung liegt die Aufgabe zugrunde, diese Nachteile zu beseitigen und ein Durchgangs- und Absperrventil der eingangs genannten Art zu schaffen, welches einfach in seinem Aufbau und sicher in der Wirkungsweise ist.

Erreicht ist dieses Ziel dadurch, daß im abgesperrten Zustand des Ventils die Dichtfläche oder die Dichtflächen der mittleren Scheibe mit der Dichtfläche oder den Dichtflächen der einen äußeren Scheibe zusammenwirkt bzw. zusammenwirken, während gleichzeitig der oder die Durchgänge der mittleren Scheibe mit dem oder den Durchgängen der anderen äußeren Scheibe in kommunizierender Verbindung bleibt bzw. bleiben.

Erfindungsgemäß ist sichergestellt, daß ein Mediumeinschluß bei abgesperrter Armatur in den Durchgängen der mittleren Scheibe und damit zwischen den äußeren Scheiben nicht mehr möglich ist.

Nach einer bevorzugten Ausführungsform der Erfindung sind die Durchgänge der Scheiben von der einen zur anderen Seite erweitert bzw. verjüngt, wobei die Durchgänge auf ihrer verjüngten Seite von der oder den durch die verjüngten Durchgangsseiten unterbrochenen Dichtflächen absperrbar sind, während die durch die erweiterten Durchgangsseiten unterbrochenen Dichtflächen so reduziert sind, daß sie die verjüngten oder erweiterten Seiten der Durchgänge nicht überdecken. Demnach ist erfindungsgemäß die Anordnung der Scheiben zueinander so vorgesehen, daß sich die Durchgänge in der ersten äußeren Scheibe in Strömungsrichtung verjüngen, wodurch eine Strömungsablösung am Eintritt weitgehendst vermieden und eine erhebliche Verminderung des Strömungswiderstandes erzielt wird. Ferner findet bei dieser Anordnung und entsprechender Strömungsrichtung die Drosselung bei Teilöffnung des Ventils im wesentlichen zwischen den beiden ersten Scheiben statt, und die Strömung verläßt die bewegliche Scheibe mit erheblich verminderter Geschwindigkeit wegen der in Drosselstellung zwischen der beweglichen Scheibe und der zweiten äußeren Scheibe größeren Spalte. Dadurch ist auch der Strömungsdrall vermindert.

Eine weitere bevorzugte Ausführungsform ist in den Ansprüchen gekennzeichnet.

In der Zeichnung ist der Erfindungsgegenstand in zwei Ausführungsbeispielen dargestellt, und zwar zeigen :

Fig. 1 ein Durchgangs- und Absperrventil im Längsschnitt gemäß der Linie A-A der Fig. 2,

Fig. 2 das Ventil im Querschnitt,

Fig. 3 eine Scheibendraufsicht mit erweiterten Durchgangseiten, gemäß der Linie B-B der Fig. 1,

Fig. 4 einen Schnitt entlang des Teilkreises B der Fig. 3 in geschlossener Stellung des Ventils,

Fig. 5 einen Schnitt entsprechend Fig. 4, jedoch in geöffneter Stellung des Ventils,

Fig. 6 eine andere Scheibenausführung im Längsschnitt gemäß der Linie C-C der Fig. 7 und

Fig. 7 eine Draufsicht auf das Scheibenpaket gemäß Fig. 6.

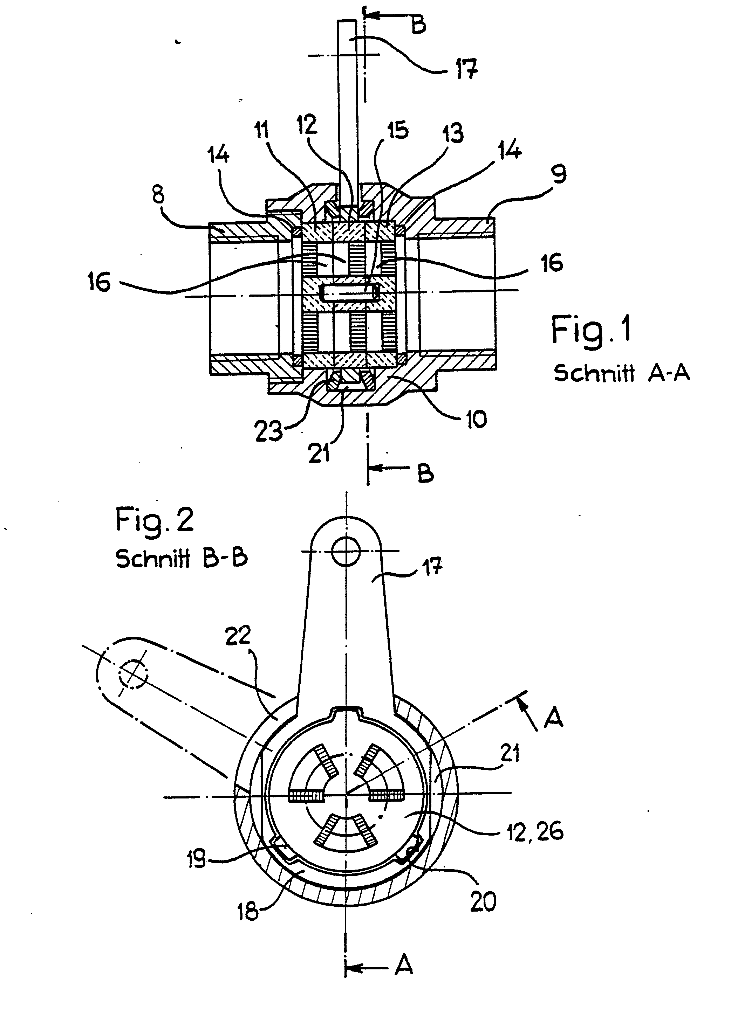

Die Fig. 1 und 2 zeigen ein Ventilgehäuse, welches zwei Anschlußstücke 8 und 9 für eine Leitung aufweist sowie einen die Steuerelemente beinhaltenden mittleren Teil 10. Wie ersichtlich, bestehen die Steuerelemente aus drei Scheiben 11, 12 und 13, von denen die mittlere Scheibe 12 drehbeweglich ist. Die Scheiben 11, 12 und 13 bestehen vorzugsweise aus Keramik und liegen unmittelbar dicht aneinander. Die beiden feststehenden äußeren Scheiben 11 und 13 werden mittels der Dichtringe 14 gegen die bewegliche Scheibe 12 gedrückt, welche über Wellenzapfen 15 in entsprechenden Ausnehmungen der feststehenden Scheiben 11 und 13 lagert. Die Scheiben 11, 12 und 13 sind mit Durchgängen 16 versehen.

Wie ferner ersichtlich, steht die bewegliche Scheibe 12 mit einem Betätigungsorgan 17 in Verbindung, welches mit einem ringförmigen Teil 18 die bewegliche Scheibe 12 ganz umgibt und somit radial gesichert ist. Die Scheibe 12 greift mit Nasen 19 in Nuten 20 des ringförmigen Teils 18 des Betätigungsorgans 17 ein und ist mit diesem nur in Bezug auf Drehmomenteinleitung formschlüssig verbunden. Der ringförmige Teil 18 ist in einem durch eine Nut 21 gebildeten Aufnahmeraum des Ventilgehäuses angeordnet, während der hebelförmige Teil des Betätigungsorgans 17 durch einen Längsschlitz 22 des Ventilgehäuses nach außen ragt. In dem Aufnahmeraum 21 befinden sich als Tellerfedern ausgebildete Lagerringe 23, die in axialer Richtung einen elastischen Druck auf den ringförmigen Teil 18 des Betätigungsorgans 17 ausüben und auf diese Weise Querkräfte aufnehmen.

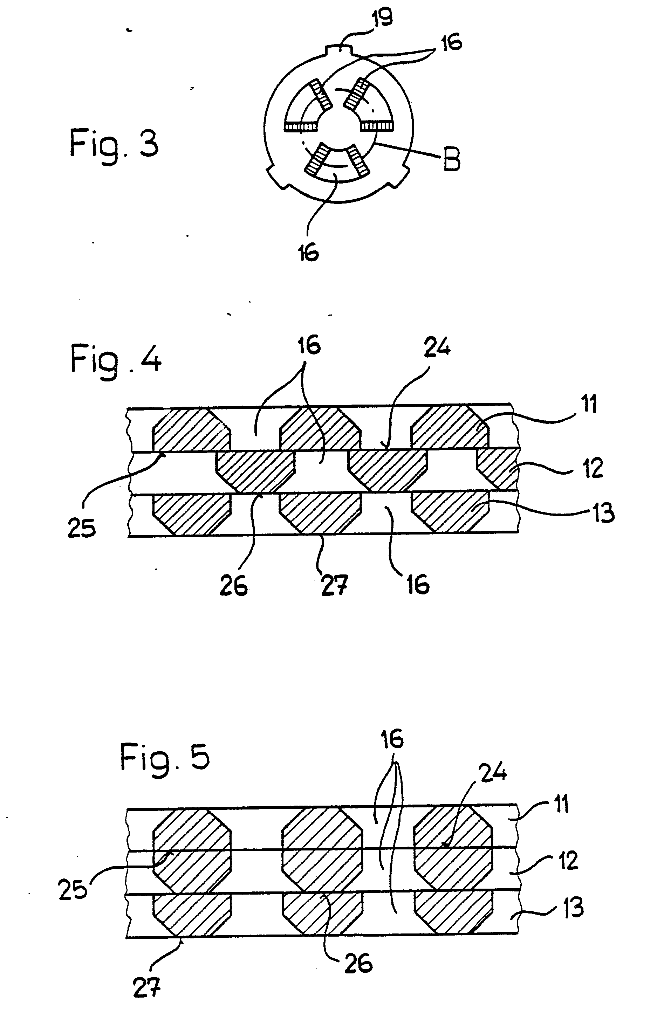

Die Scheiben 11, 12 und 13 (siehe Fig. 3 bis 7) sind untereinander gleich gestaltet. Sie sind erfindungsgemäß so ausgestaltet und angeordnet, daß im abgesperrten Zustand des Ventils die Dichtflächen 24 der beweglichen Scheibe 12 mit den Dichtflächen 25 der einen äußeren Scheibe 11 zusammenwirken, während gleichzeitig die Durchgänge 16 der mittleren Scheibe 12 mit den Durchgängen der anderen äußeren Scheibe 13 in kommunizierender Verbindung bleiben.

Gemäß der in den Fig. 3 bis 5 gezeigten ersten Ausführungsform sind die Durchgänge 16 der Scheiben 11, 12 und 13 von der einen zur anderen Seite erweitert bzw. verjüngt. Dabei sind die Durchgänge 16 der Scheibe 11 auf ihren verjüngten Seiten durch die Dichtflächen 24, 25 absperrbar, während die Dichtflächen 26, 27 auf den Scheibenseiten mit den erweiterten Bereichen der Durchgänge 16 so reduziert sind, daß sie die verjüngten oder erweiterten Seiten der Durchgänge 16 nur teilweise überdecken können.

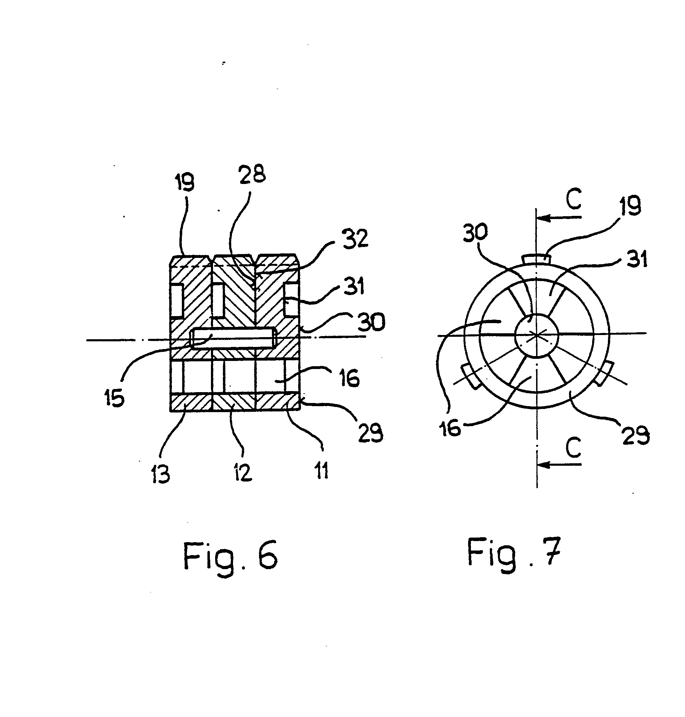

Gemäß der in den Fig. 6 und 7 gezeigten Ausführungsform weisen die Scheiben 11, 12 und 13 auf ihrer einen Seite eine durchgehende Dichtfläche (28, 32) auf. Auf ihrer anderen Seite besitzen sie eine die Durchgänge 16 im Außenbereich der Scheiben 11, 12 und 13 umgebende vorspringende Dichtfläche 29, welche in einer Ebene mit einer mittigen Lagerfläche 30 liegt, während die Stegflächen 31 gegenüber dieser Ebene zurückgesetzt sind.

Erfindungsgemäß ist ein Mediumeinschluß zwischen den beiden äußeren Scheiben 11 und 13 unmöglich.

Das Ventil bereitet in der Fertigung keine Schwierigkeiten. Die Montage ist denkbar einfach. Das Ventil eignet sich z. B. für Wasser oder Öl führende Leitungen an Maschinen, die sich im Laufe ihrer Einschaltzeit erwärmen und dabei das Leitungssystem mit erwärmen. Ebenso ist der Einschluß von Druckgasen vermieden, der bei Belüftung der Leitungen zum unbeabsichtigten Öffnen der Scheiben nach außen führen würde (Abheben der Scheiben).

**Patentansprüche**

1. Durchgangs- und Absperrventil mit mindestens drei untereinander gleichgestalteten und Durchgänge aufweisenden Scheiben als Dicht- und Steuerelemente, von denen die beiden äußeren Scheiben feststehen, während die mittlere Scheibe beweglich ist, wobei die Scheiben Dichtflächen aufweisen, dadurch gekennzeichnet, daß im abgesperrten Zustand des Ventils die Dichtfläche oder die Dichtflächen (24, 28) der mittleren Scheibe (12) mit der Dichtfläche oder den Dichtflächen (25, 32) der einen äußeren Scheibe (11) zusammenwirkt bzw. zusammenwirken, während gleichzeitig der oder die Durchgänge (16) der mittleren Scheibe (12) mit dem oder den Durchgängen (16) der anderen äußeren Scheibe (13) in kommunizierender Verbindung bleibt bzw. bleiben.

2. Durchgangs- und Absperrventil nach Anspruch 1, dadurch gekennzeichnet, daß der oder die Durchgänge (16) der Scheiben (11, 12, 13) von der einen zur anderen Seite erweitert bzw. verjüngt ist bzw. sind, wobei die Durchgänge (16) auf ihren verjüngten Seiten von der oder den durch diese Seiten unterbrochenen Dichtflächen (24, 28) absperrbar sind, während die durch die erweiterten Durchgangsseiten unterbrochenen Dichtflächen (26, 27, 29) so reduziert sind, daß sie die verjüngten oder erweiterten Seiten der Durchgänge (16) nicht überdecken.

3. Durchgangs- und Absperrventil nach den Ansprüchen 1 und 2, dadurch gekennzeichnet, daß die Scheiben (11, 12, 13) auf ihrer einen Seite eine durchgehende Dichtfläche (28, 32) aufweisen, während sie auf ihrer anderen Seite eine den oder die Durchgänge (16) im Außenbereich der Scheiben (11, 12, 13) umgebende Dichtfläche (29) besitzen und auf dieser Seite in ihrem den oder die Durchgänge (16) aufweisenden Bereich gegenüber der Dichtfläche (29) zurückgesetzt sind.

**Claims**

1. Throughflow and closure valve having at least three discs, as sealing and control elements, located one below the other and of similar construction and having throughflow passages, the two outer discs of which are fixed whilst the middle disc is movable, the discs having sealing surfaces, characterised in that in the closed state of the valve the sealing surface or surfaces (24, 28) of the middle disc (12) co-operates or cooperate with the sealing surface or surfaces (25, 32) of the one outer disc (11), whilst at the same time the throughflow passage or passages (16) of the middle disc (12) remains or remain in communicating connection with the throughflow passage or passages (16) of the other outer disc (13).

2. Throughflow and closure valve according to claim 1, characterised in that the throughflow passage or passages (16) of the discs (11, 12, 13) is or are widened or narrowed from one to the other side, and on their narrowed sides the throughflow passages (16) can be closed by the sealing surface or surfaces (24, 28) interrupted by these sides, whilst the sealing surfaces (26, 27, 29) interrupted by the widened throughflow passage sides are reduced so that they do not cover the narrowed or widened sides of the throughflow passages (16).

3. Throughflow and closure valve according to claims 1 and 2, characterised in that the discs (11, 12, 13) have a continuous sealing surface (28, 32) on one of their sides whilst on their other side they have a sealing surface (29) surrounding the throughflow passage or passages (16) in the outer region of the discs (11, 12, 13) and on this side they are set back with respect to the sealing surface (29) in their region having the throughflow passage or passages.

**Revendications**

1. Vanne de passage et d'arrêt comportant au moins trois disques comme éléments d'étanchéité et de contrôle, ces disques étant identiques l'un à l'autre et présentant des orifices de passage, à la suite de quoi ces disques présentent des surfaces d'étanchéité, les deux disques extérieurs restant fixes tandis ·que le disque central est mobile, caractérisée en ce que, en position fermée de la vanne, la ou les surfaces d'étanchéité (24, 28) du disque central (12) coopère ou respectivement coopèrent avec la ou les surfaces d'étanchéité (25, 32) d'un premier disque extérieur (11), tandis qu'en même temps le ou les orifices de passage (16) du disque central (12) reste ou respectivement restent en liaison de communication avec le ou les orifices de passage (16) de l'autre disque extérieur (13).

2. Vanne de passage et d'arrêt suivant la revendication 1, caractérisée en ce que l'orifice (16) ou les orifices (16) de passage des disques (11, 12, 13) sont agrandis ou bien réduits d'un flanc à l'autre, à la suite de quoi, les orifices (16), de leurs côtés réduits, sont obturables par la ou les surfaces d'étanchéité (24, 28) interrompues par lesdits côtés, tandis que les surfaces d'étanchéité (26, 27, 29) interrompues par les côtés agrandis des orifices de passage sont tellement réduites qu'elles ne recouvrent pas les côtés réduits ou agrandis des orifices de passage (16).

3. Vanne de passage et d'arrêt suivant les revendications 1 et 2, caractérisée en ce que les disques (11, 12, 13) présentent sur un de leur flanc une surface d'étanchéité continue (28, 32), tandis que, sur l'autre flanc, ils possèdent une surface d'étanchéité (29) ceinturant le ou les orifices (16) dans la zone extérieure des disques (11, 12, 13) et, sur ce même autre flanc, dans leur zone présentant le ou les orifices de passage (16), lesdits disques sont en retrait par rapport à la surface d'étanchéité (29).

Fig. 1
Schnitt A-A

Fig. 2
Schnitt B-B

Fig. 3

Fig. 4

Fig. 5

Fig. 6

Fig. 7